Europäisches Patentamt

European Patent Office

Office européen des brevets

(19)

(11) Publication number: **0 139 513**
**B1**

(12) **EUROPEAN PATENT SPECIFICATION**

(45) Date of publication of patent specification: **01.06.88**

(21) Application number: **84306970.9**

(22) Date of filing: **12.10.84**

(51) Int. Cl.⁴: **C 09 D 3/72,** C 09 D 3/66,
B 05 D 5/06

(54) Flexible coating compositions.

(30) Priority: **13.10.83 US 553322**
**13.10.83 US 558399**
**13.10.83 US 598551**

(43) Date of publication of application:
**02.05.85 Bulletin 85/18**

(45) Publication of the grant of the patent:
**01.06.88 Bulletin 88/22**

(84) Designated Contracting States:
**DE FR GB NL**

(56) References cited:
**US-A-3 962 369**

(73) Proprietor: **FORD MOTOR COMPANY LIMITED**
**Eagle Way**
**Brentwood Essex CM13 3BW (GB)**

(84) **GB**

(73) Proprietor: **FORD-WERKE**
**AKTIENGESELLSCHAFT**
**Ottoplatz 2 Postfach 21 03 69**
**D-5000 Köln 21 (DE)**

(84) **DE**

(73) Proprietor: **FORD FRANCE SOCIETE ANONYME**
**344 Avenue Napoléon Bonaparte B.P. 307**
**F-92506 Rueil Malmaison Cedex (FR)**

(84) **FR**

(73) Proprietor: **Ford Motor Company**
**The American Road**
**Dearborn, MI 48121 (US)**

(84) **NL**

(72) Inventor: **Alexander, Delores J.**
**29060 Lone Elm Lane**
**Southfield Michigan 48076 (US)**
Inventor: **Kurple, Kenneth R.**
**9533 Springborn Road**
**Anchorville Michigan 48004 (US)**
Inventor: **Kordomenos, Panagiotis I.**
**42758 Elizabeth Circle**
**Mount Clements Michigan 48044 (US)**

Courier Press, Leamington Spa, England.

EP 0 139 513 B1

**0 139 513**

Representative: **Messulam, Alec Moses et al**
**A. Messulam & Co. 24 Broadway**
**Leigh on Sea Essex SS9 1BN (GB)**

# 0 139 513

**Description**

This invention relates to flexible coating compositions which have excellent adherence to metal or plastic and possess superior weathering properties. This composition can be employed as a single coating, in combination with other coatings, or can be used for each coat of a basecoat/clearcoat system. More particularly, the invention relates to coating compositions which comprise hydroxy-containing urethane modified polyester made from urethane modified diols reacted with polyol and diacid, crosslinking agent selected from amine-aldehyde crosslinking agent and polyisocyanate crosslinking agent and, optionally, a high molecular weight linear polyurethane.

Recently, there has been interest in the use of rubbery, resilient materials for areas which are subject to mechanical shock such as automobile bumpers, moldings and front ends. The use of such materials aids in providing protection from permanent structural damage but, in order to attain the desired appearance, a protective coating must have unique properties, such as a high degree of extensibility, impact resistance, resistance to cracking under severe environmental conditions, such as exposure to low temperature and low humidity. Conventional coatings, including those employed on rubber and similar extensible objects heretofore, do not have the required combination of properties. Generally compositions that are flexible enough to be applied over both metal and plastic substrates have rather poor weatherability and overall durability.

US—A—3,962,369, 3,882,189 and 3,962,522 are exemplary of numerous patents which describe flexible coating compositions wherein the resin comprises polyurethane modified polyesters formed by reacting polyisocyanate with polyester polyols. These resins are cured with amine aldehyde crosslinkers. It is taught therein, that the presence of the urethane groups in the polymer significantly contributes to the flexibility as well as improved weathering properties, gloss, and abrasion resistance of the coating. However, while it is thus desirable to employ a substantial number of urethane groups in these resins, the amount which may be included in these types of resins is limited. When hydroxy polyester resin is reacted with polyisocyanate it has a tendency to form a gelled mass and thus the amount of polyisocyanate that may be employed must be restricted in order to avoid gelation. Still further, these urethane linkages are added in a latter modification of the polyester polyol reaction product, rather than being incorporated into the backbone of the resin.

This invention is directed to flexible coating compositions which are suitable for use over various substrates. The compositions may be used over rubbery, resilient materials as well as over metal. The coating compositions of this invention is characterized in that it comprises:

(A) hydroxy-containing urethane modified polyester (i) having a number average molecular weight ($\overline{M}_n$) of between 1000 and 10,000, (ii) having a hydroxyl number of between 30 and 200, and (iii) containing between 1 and 10 urethane groups per molecule, and being made from reactants comprising, (1) urethane modified diol made by reacting, (a) diol, and (b) diisocyanate, wherein the diol and diisocyanate are reacted in a molar ratio of from 4:1 to 4:3, (2) polyol comprising at least 5 weight percent triol, and (3) acid component selected from dicarboxylic acids and anhydrides thereof,

(B) crosslinking agent selected from amine-aldehyde crosslinking agent and polyisocyanate crosslinking agent, and

(C) 0—60 weight percent, based on the total weight of (A) and (B), of a linear polyurethane having a number average molecular weight between 15,000 and 40,000, preferably of between 20,000 and 30,000.

This invention is also directed to basecoat/clearcoat coating compositions wherein the clearcoat composition comprises the coating composition described above and the basecoat composition comprises the coating composition described above wherein the crosslinking agent is amine-aldehyde crosslinking agent. The basecoat coating composition additionally comprises pigment. In such systems, the clearcoat composition is in film adherence to the basecoat composition that is in adherence to a substrate.

Advantageously, the flexible coatings of the invention of this application possess superior weathering properties as well as excellent adhesion to metal and plastic, thus making them well suited for use as coatings on various car components. In forming the modified polyester of the coatings of the invention of this application, the urethane linkages are advantageously incorporated into the backbone of the modified polyester, since they are formed in an initial reaction of diisocyanate with diol, rather than being incorporated into the polyester resin in a later reaction step as is done when forming prior art urethane polyester resins. It has now been found that the initial incorporation of the urethane linkage into the backbone of the modified polyester allows the formation of more flexible coatings with improved properties, when compared to the prior art coatings discussed above.

Still further, the ability to use of the same coating compositions on metal and plastic components in car production offers distinct commercial advantages, particularly in terms of production efficiency. Additionally, because these coatings can be employed on metal as well as plastic components, the problem of color matching, which must be resolved when using a different coating on the metal and plastic, is eliminated.

This invention is directed to flexible coating compositions which comprise novel hydroxy-containing urethane modified polyester crosslinkable with amine-aldehyde crosslinking agent or polyisocyanate crosslinking agent. This coating composition may be employed as a pigmented or clearcoating. These coating compositions may also be employed as the basecoat and clearcoat in basecoat/clearcoat systems

3

wherein the basecoat comprises amine-aldehyde crosslinking agent and pigment.

The hydroxy-containing urethane modified polyester of the coating composition of this invention has a number average molecular weight ($\bar{M}_n$) of between about 1000 and about 10,000, preferably between about 2000 and about 4000. This modified polyester has a hydroxyl number of between about 30 and about 200, preferably between about 50 and about 120. It also contains between about 1 and about 10 urethane groups per molecule. One of the reactants used to form the hydroxy-containing urethane modified polyester is a urethane modified diol which is made by reacting diol and diisocyanate. In forming this urethane modified diol, the diol and the diisocyanate are reacted in a molar ratio of from about 4:1 to about 4:3, preferably in a molar ratio of from about 2:0.8 to about 2:1.2, most preferably in a molar ratio of about 2:1. The diols employed in making the urethane modified diol include, but are not limited to, alkylene glycols, such as butylene glycol, neopentyl glycol, 1,5 pentene glycol, 3-cyclohexene-1,1-dimethynol, and other glycols such as hydrogenated bisphenol A, caprolactone diol (i.e., the reaction product of caprolactone and ethylene glycol), hydroxy alkylated bisphenols, polyether glycols, e.g., poly(oxytetramethylene) glycol, polyester diols, e.g., 2,2 - dimethyl - 3 - hydroxypropyl - 2,2 - dimethyl - 3 - hydroxypropionate, and the like. Preferred diols are neopentyl glycol and 2,2 - dimethyl - 3 - hydroxypropyl - 2,2 - dimethyl - 3 - hydroxypropionate, the latter material being commercially available as Esterdiol 204 (a trademark of and available from Union Carbide Corp., New York, N.Y.). While a number of types of diols have been mentioned above as suitable for use as the diol component in making the urethane modified diol of this invention, their disclosure is not meant to be limiting. A great many diols are known in the art. Selection of other diols which would be suitable for use in forming the urethane modified diol would be well within the skill of those in the art. Mixtures of diols may also be employed in making the urethane modified diol.

The diisocyanate employed in making the urethane modified diol may be essentially any diisocyanate. Many such organic diisocyanate are known in the art. Suitable diisocyanates include hydrocarbon diisocyanate or substituted hydrocarbon diisocyanate, such as 1,6-hexamethylene diisocyanate, isophorone diisocyanate, p-phenylene diisocyanate, biphenyl diisocyanate, toluene diisocyanate, and 3,3 - dimethyl - 4,4 - biphenylene diisocyanate. While the diisocyanate may be any of a number of aliphatic, cycloaliphatic, and aromatic diisocyanates, it is preferred that the diisocyanate be an aliphatic diisocyanate, such as 4,4-dicyclohexylmethanediisocyanate. As would be apparent to those skilled in the art, mixtures of various diisocyanates may also be employed as the diisocyanate component used in forming the urethane-modifying diol.

The polyol component used in forming the hydroxy-containing urethane modified polyester comprises at least about 5 weight percent triol based on the weight of the polyol component. Preferred triols are conventional low molecular triols such as 1,2,6-hexene triol, 1,1,1-trimethylol propane, pentaerythritol, 3-(2-hydroxypropoxy)-1,2-propanediol and polycaprolactone triols, which are commercially available as, for example, PCP-301 (trademark, Union Carbide Corp., New York, N.Y.). This polyol component may also comprise, in addition to the triol, other polyol material such as diols or tetrol. Preferably however, these other polyols, when employed, consist of diols. Examples of suitable diols which may be included in the polyol component are those which have been disclosed above as suitable for forming the urethane modified diol. Preferred diols for use in the polyol component are linear aliphatic diols. While the polyol component may comprise materials such as diols in addition to the triols, the polyol component may consist essentially of triols. By employing diols in the polyol component in addition to the triols the flexibility of the coating composition is generally increased. Thus selection of the polyol component to be used in forming the hydroxy-containing urethane modified polyester of the composition will be dependent on the particular desired properties and application of the coating composition. When diols are employed in the polyol component, the polyol preferably comprises from 10 to 80 weight percent triols and from 90 to 20 weight percent diols.

The acid component which is used to form the modified polyester of the composition comprises aliphatic, aromatic, cycloaliphatic dicarboxylic acids or anhydrides thereof. Preferred dicarboxylic acids are the $C_6$—$C_{12}$ acids, which include adipic, azelaic, sebacic, or dodecane dicarboxylic acid, or cyclohexanedicarboxylic acid. More preferably, the dicarboxylic acids employed are aliphatic dicarboxylic acids, most preferably additionally being linear. Mixtures of suitable acids and/or their anhydrides may also be used as the acid component in this invention.

In forming the coating compositions of this invention, the diol (a) and the diisocyanate (b) described above are combined and reacted generally at an elevated temperature, so as to form the urethane modified diol. The ratio of the diol and diisocyanate has been chosen (i.e., a molar excess of diol) so that at the completion of this reaction no free isocyanates are present; the isocyanates having been incorporated into a hydroxy functional material. This urethane modified diol is then combined and reacted with the polyol and acid components, generally in the presence of a catalyst and at elevated temperatures, so as to effect formation of a hydroxy-containing urethane modified polyester. Suitable catalysts for the carboxy/hydroxy condensation reaction include such catalysts as tetraisopropyl titanate, strong acids such as p-toluene sulfonic acid, phosphoric acid, sulfuric acid and materials such as zinc oxide, antimony oxide ($Sb_2O_3$) and sodium acetate. Other catalysts will be apparent to those skilled in the art.

The reactions, whereby the hydroxy-containing urethane modified polyesters are formed, are generally carried out in the presence of solvents commonly employed in coating formulations such as toluene, xylene, methyl amyl ketone, etc.

4

Another essential component of the coating compositions of this invention is a crosslinking agent. As discussed above, the crosslinking agent employed in the coating compositions of this invention is selected from amine-aldehyde crosslinking agent and polyisocyanate crosslinking agent. In basecoat/clearcoat systems employing the compositions of this invention as the basecoat composition and the clearcoat composition, the basecoat coating composition crosslinking agent is amine-aldehyde crosslinking agent and the clearcoat coating composition crosslinking agent is selected from amine-aldehyde crosslinking agent and polyisocyanate crosslinking agent. Amine-aldehyde crosslinking agents and polyisocyanate crosslinking agents will be discussed in detail.

Amine-aldehyde crosslinking agents suitable for crosslinking hydroxy functional bearing materials are well known in the art. Typically, these crosslinking materials are product of reactions of melamine, or urea with formaldehyde and various alcohols containing up to and including 4 carbon atoms. Preferably, the amine-aldehyde crosslinking agents useful in this invention are amine-aldehyde resins such as condensation products of formaldehyde with melamine, substituted melamine, urea, benzoquanamine or substituted benzoquanamine. Preferred members of this class are methylated melamine-formaldehyde resins such as hexamethoxymethylmelamine. The particular preferred crosslinkers are the high solids melamine resins which has substantially 100 percent nonvolatile content as measured by the foil method at 45°C for 45 minutes. For the purposes of the preferred composition of this invention it should be recognized that it is important not to introduce extraneous diluents that lower the final solids content of the coating. Other suitable amine-aldehyde crosslinking agents will be apparent to one skilled in the art. The amine-aldehyde materials function as a crosslinking agent in the compositions of the invention by reacting with the hydroxy functionality of the hydroxy-containing urethane-modified polyester (A) and by reaction with the hydroxy functionality of the linear polyurethane (C). If such materials are included in the composition. The amine-aldehyde crosslinking agent is generally included in the coating composition in an amount of between about 5 and about 60, more preferably between about 20 and about 40 weight percent based on the weight of the hydroxy-containing urethane modified polyester of the composition. Selection of the optimal amount of amine-aldehyde crosslinking agent to be employed in the coating composition is dependent on the desired properties of the coating composition (e.g., flexibility) as well as its intended use.

Particularly preferred amine-aldehyde crosslinking agents are the amino crosslinking agents sold by American Cyanamid Company, Wayne, New Jersey under the trademark "Cymel". In particular, Cymel 301, 323, 325, 1130, 1156, which are alkylated melamine aldehyde resins are useful in the compositions of this invention. The crosslinking reactions are catalytically accelerated by acids. One such catalyst for example which may be so employed is p-toluene sulfonic acid (PTSA) which, when employed, is generally added to the composition in about 5% by weight based on the weight of crosslinking agent and hydroxy-containing modified polyester of the composition. .

The other crosslinking agent which may be used in the coating composition of the invention is a polyisocyanate crosslinking agent, i.e., a compound having 2 or more, preferably 3 or more, reactive isocyanate groups per molecule. These polyisocyanate materials function as a crosslinking agent in the composition of the invention by reaction with the hydroxyl functionality of the hydroxy containing urethane modified polyester (A) and by reaction with the hydroxyl functionality on the linear polyurethane if such linear polyurethane is included in the composition. This polyisocyanate crosslinking agent is generally included in the coating composition of the invention in an amount of between 5 and 60, more preferably between 20 and 40 weight percent based on the weight of the hydroxy-containing urethane modified polyester of the coating composition. Selection of the optimal amount of polyisocyanate crosslinking agent to be employed in the coating composition is dependent on the desired properties (e.g., flexibility) as well as its intended use and selection of such amount would be within the skill of one in the art.

Polyisocyanates are well known in the art and numerous suitable organic isocyanates having 2 or more reactive isocyanate groups per molecule will be apparent to those skilled in the art. Among the many suitable polyisocyanates are aliphatic, cycloaliphatic and aromatic isocyanate compounds. Representative of the numerous isocyanates which may be employed are (1) aliphatic diisocyanates such as trimethylene diisocyanate, tetramethylene diisocyanate, pentamethylene diisocyanate, hexamethylene diisocyanate, 1,2 propylene diisocyanate, 1,2 butylene diisocyanate, 2,3 butylene diisocyanate, 1,3 butylene diisocyanate, 1,3 butylene diisocyanate, ethylidene diisocyanate, butylidene diisocyanate, 4,4'bis-(isocyanate hexyl) methane, bis(2-isocyanate-ethyl)fumarate, 2,6-diisocyanate methyl caproate, 2,2,4(2,4,4)-trimethylhexamethylene diisocyanate, and dimer acid diisocyanates; (2) cycloaliphatic diisocyanates such as 1,3 cyclopentane diisocyanate, 1,4 cyclopentane diisocyanate, 1,2 cyclopentane diisocyanate, and methylcyclohexylene diisocyanate; (3) aromatic diisocyanates such as m-phenylene diisocyanate, p-phenylenediisocyanate, 4,4'diphenyl diisocyanate, 1,5 methylene diisocyanate, 1,4 naphthalene diisocyanate; (4) aliphatic/aromatic diisocyanates such as 4,4'diphenylene methane diisocyanate, 2,4 or 2,6 tolulene diisocyanate, 4,4'toluidene diisocyanate, 1,4 xylylene diisocyanate; (5) nuclear substituted aromatic compounds such as dianisidine diisocyanate, 4,4'diphenylether diisocyanate, chlorodiphenylene diisocyanate; (6) triisocyanates such as triphenylmethane 4,4', 4,4'' triisocyanate, 1,3,5 triisocyanate benzene, 2,4,6 triisocyanate toluene; (7) tetraisocyanates such as 4,4' diphenyl dimethylmethane 2,2',5,5' tetraisocyanate; (8) polymerized isocyanates such as tolylene diisocyanate dimers and trimers and the like; and (9) polyisocyanates such as prepolymers derived from a polyol, including polyether polyols or polyester polyols (including polyethers which are reacted with excess polyisocyanates to form isocyanate terminated prepolymers), simple polyols such as glycols (e.g., ethylene glycol, propylene glycol), other polyols such as glycerol, trimethylol propane, hexane triols, pentaerythritol and the like, as well as monoethers, e.g., diethylene glycol, tripropylene glycol and the like and polyethers, i.e., alkylene oxide condensates of the above. While the polyisocyanate may be any organic polyisocyanate, such crosslinking agents for coating composition to be employed as topcoats are preferably aliphatic or cycloaliphatic polyisocyanates due to their superior weathering properties.

Especially preferred for use in the compositions of the invention are trimerized products of aliphatic diisocyates such as 1,6 hexamethylene diisocyanate. Still another particularly preferred type of polyisocyanate crosslinking agent for the composition is polyisocyanate having a biuret structure. This type of polyisocyanate is well known as are methods for making the same. One such polyisocyanate crosslinking agent is a high molecular weight biuret of 1,6 hexamethylene diisocyanate sold by Mobay Chemical Company under the tradename Desmodur N. Exemplary of other biuret type polyisocyanates are those prepared in accordance with US—A—3,976,622 to Wagner et al.

When the coating composition of this invention is used as the basecoat and the clearcoat in basecoat/clearcoat systems as previously described in this application, the hydroxy-containing urethane modified polyester employed in the basecoat coating composition and the clearcoat coating composition may be similar or different embodiments of this polyester. Selection of the particular modified polyester to be employed in the coatings would be dependent on the particular properties and application of the coatings desired. Such selection will be well within the skill of one in the art.

Similarly, the amounts of crosslinking agent to be employed in the basecoat composition and in the clearcoat composition are selected individually, i.e., the weight percent amounts of crosslinker employed in the basecoat composition and in the clearcoat composition of a particular basecoat/clearcoat system may be different or be similar.

The basecoat coating composition of the invention also includes pigments, as noted above. A wide variety of pigments are available and known for use in coating compositions by those skilled in the art. Selection of the optimal amount of pigment to be included in the basecoat composition would be dependent on, e.g., desired color, hiding requirements of the coating, etc., and would be within the skill of those in the art.

Optional Materials

Additional materials which may be employed in the coating compositions of this invention include a high molecular weight linear polyurethane which has a number average molecular weight of between 15,000 and 40,000, preferably between 20,000 and 30,000. It may be made by reacting one of the above mentioned diisocyanates and diols, such as oligoester diol, polycaprolactone diol, polyoxypropylene diol, polyether diols, etc. Suitable high molecular weight linear polyurethane materials are commercially available, for example, as Spenlite L06-30S, (available from and a trademark of Spencer-Kellogg, Buffalo, New York). The high molecular weight polyurethane may be employed in the composition in amounts up to about 60 weight percent based on the total weight of the hydroxy-containing urethane modified polyester and amine-aldehyde crosslinking agent. When employed, it is preferred that they be included in the composition in amounts of between about 10%—60%, more preferably 30%—50% by weight as described. It has been particularly noted that when the high molecular weight linear urethane is employed in the basecoat of basecoat/clearcoat systems, the depth of the color and metallic glamour of the coatings is improved. While this linear polyurethane, when employed in basecoat/clearcoat systems, is generally preferably only included in the basecoat composition it may be employed in either or both coats and the amounts employed are independently selected.

It has been noted above that in basecoat/clearcoat systems, the coating compositions of this application may be employed as one or both coatings. In those instances where it is used for both coats of a basecoat/clearcoat system, the basecoat composition and the clearcoat composition may be substantially alike or may be different embodiments of the claimed coating composition as would be dependent on the particular properties and application desired.

In addition to the above discussed components, other materials may be included in the coating compositions of this invention. These include materials such as catalysts, antioxidants, U.V. absorbers, solvents, surface modifiers and whitening agents. Solvents used in the coating composition of this invention are those which are commonly used, e.g., to facilitate spray application at high solids content and include toluene, xylene, methylethyl ketone, acetone, 2-ethoxy-1-ethanol, diacetone alcohol, tetrahydrofuran, ethyl acetate, dimethylsuccinate, dimethylglutarate, dimethyladipate or mixtures thereof. The solvent in which the hydroxy-containing urethane modified polyester is prepared may be employed as a solvent for the composition thus eliminating the need for drying the resin after preparation if such is desired.

Typical of these ultraviolet stabilizers that are useful in this invention are benzophenones such as dodecyl oxibenzophenone, 2,4-dihydroxybenzophenone, hydroxybenzophenones containing sulfonic groups, 2-4-dihydroxy-3'5'-ditertiary butyl benzophenone, 2,2',4',trihydroxy benzophenone esters of dicarboxylic acids, 2-hydroxy-4-acryloxyethoxybenzophenone, aliphatic mono esters of 2,2',4-trihydroxy-4' alkoxybenzophenone; 2-hydroxy-4-methoxy-2-carboxybenzophenone; triazoles such as 2-phenyl-4-(2'4'-dihydroxybenzoyl)-triazoles substituted benzotriazoles such as hydroxy-phenyltriazoles such as 2-(2'hydroxy-5'-methylphenyl) benzotriazole, 2-(2'-hydroxy-phenyl) benzotriazole, 2-(2'hydroxy-5'-octylphenyl) naphthiotriazole.

Another type of ultraviolet light stabilizer and one that is particularly preferred for use in the coatings of this invention contains the sterically hindered polyalkylpiperidine radical and at least two primary hydroxyl groups available for reacting with the crosslinking agent, e.g., the amine-aldehyde or polyisocyanate component, of the coating composition.

Typical of the antioxidants which may be employed in the coating compositions include tetrakis alkylene (di-alkyl hydroxy aryl) alkyl ester alkanes such as tetrakis methylene 3(3',5'-dibutyl-4'hydroxyphenyl) propionate methane, reaction product of p-amino diphenylamine and glycidyl methacrylate, reaction product of n-hexyl-N'-phenylamine diamine and glycidyl methacrylate, pentaerythritol tetrakis (thioglycolate), trimethylol propane tris (thioglycolate), trimethylol ethane tris(thioglycolate), N-(4-anilino phenyl) acrylamide, N-(4-anilinophenyl) maleamic acid N-(4-anilinophenyl) maleimide, alkylhydroxyphenyl groups bonded through carboalkoxy linkages to nitrogen atom of a heterocyclic nucleus containing an imidodicarbonyl group or an inidodithiocarbonyl group, 3,3 di tert, butyl-4-hydroxy cinnamonitrile, ethyl 3,5-di tert, hexyl-4-hydroxy-cinnamate, substituted benzyl esters of B-substituted hydroxy phenyl) propionic acids, bis(hydroxyphenyl alkylene) alkyl isocyanurate compounds, tetrakis hydroxy benzyl phosphonium halides alone or in combination with a dialkylthiodialkanoate, thioeimethylidyne tetrakisphenols alone or in combination with a dialkyl thiodialkanoate or phosphite or phosphonate, dihydrocarbyl-hydroxy phenyl aryl or alkyl phosphonites or phosphonates or phosphates or phosphites or phosphinates or phosphionites or phisphorothionates or phosphinothionates, diphenyl bis (3,5-dietert-butyl-4-hydroxy) silane, hydrocarbyl-hydroxyphenyl-dihydrocarbyldithio-carbamates such as 3,5 di-tert-butyl-4-hydroxy phenyl dimethyldithio carbamate and amino benzyl thioether.

The coating composition may be used as a clear coating on a substrate, e.g., over conventional paints for enhanced gloss or over pigmented plastic substrates as a protective coating. In these instances, the coating composition would preferably include the combination of a benzotriazole such as Tinuvin 328 (a trademark of and commercially available from Ciba-Geigy, Ardsley, N.Y.), and the hindered polymeric amine noted above, and an antioxidant, such as Irganox-1010 (a trademark of and available from Ciba-Geigy). In those instances wherein the coating composition are employed, with modification, as desired, as a basecoat and a clearcoat in a basecoat/clearcoat system, a preferred embodiment of the basecoat would preferably contain only a U.V. stabilizer such as Tinuvin 328 and the clearcoat would contain a benzotriazole, e.g., Tinuvin 328, the polymeric hindered amine light stabilizer mentioned above and an antioxidant, e.g., Irganox-1000 (trademark, Ciba-Geigy). While several applications of the coating composition of this invention have been proposed, e.g., as primers, clearcoats, pigmented coatings, etc., they are not meant to be limiting. Additionally, while preferred embodiments of stabilizers and antioxidants have been taught, they are not meant to be limiting.

Surface modifiers or wetting agents are common additives for liquid paint compositions. Exact mode of operation of these surface modifiers is not known but it is thought that their presence contributes to better adhesion of coating compositions to the surface being coated and helps formation of thin coatings, particularly on metal surfaces. The choice of surface modifiers or wetting agents is dependent upon the type of surface to be coated. Selection of appropriate surface modifiers will be well within the skill of the artesian. Typical of these surface modifiers are polybutyl acrylate and a wide variety of silicon wetting agents which are commercially available.

For many applications of the coating compositions of the invention, particularly high solids compositions, it may be desirable to employ flow control additives to provide sag free coatings. Among numerous such materials, NAD's such as described by Porter (S. Porter, Jr., and B. N. McBane, US—A—4,025,474, May 24, 1977) are compatible with these coating compositions. These particle dispersions may be included generally in an amount up to 15% by weight of the total composition. Other types of NAD's such as described by D. L. Maker and S. C. Peng (US—A—3,814,721) also may be included in the coating composition.

The coating composition of the invention may also include pigments. The optimal amount of pigment which may be included would be dependent on the particular use of the coating composition as is apparent to one skilled in the art. For example, primers generally contain higher levels of pigment as compared to basecoats of basecoat/clearcoat systems and conventional enamels.

Selection of the optimal amount of pigment to be included in the composition would be dependent, e.g., the desired hiding requirements. On the other hand, the clearcoat of such systems is essentially free of pigments.

The coating composition can be applied by conventional methods known to those in the art. These methods include roll coating, spray coating, dipping or brushing and of course the particular application technique chosen with the particular substrate to be coated and the environment in which coating operation takes place.

Particular preferred techniques for applying these coating compositions, particularly when applying the same to automobiles, is spray coating through the nozzle of the spray gun. The coating composition employing amine-aldehydes as the crosslinking agent can be applied as a single component by means of a single component spray gun. On the other hand, in spray applying the coating composition employing

polyisocyanates as the crosslinking agent, the hydroxy-containing urethane modified polyester and the optional linear polyurethane along with other additives such as pigments, U.V. absorbers, antioxidants and other nonreactive materials are admixed with a solvent. These materials are fed as one component of a two component system into a spray gun which combines the materials as they are sprayed onto the automotive substrate. The other material is the polyisocyanate crosslinking agent, which may or may not be cut with a suitable nonreactive solvent.

Industrial applicability

It will be apparent from the foregoing that this invention has industrial applicability to automotive vehicles and provides a flexible, durable coating for metal and plastic substrates.

The invention will be further understood by referring to the following detailed examples. It should be understood that the specific examples are presented by way of illustration and not by way of limitation. Unless otherwise specified, all references to "parts" are intended to mean parts by weight.

Example 1

In a suitable reactor 562 g of Esterdiol-204 (trademark of Union Carbide), 360 g of xylene were charged. The mixture was brought to 149°C and any water present was stripped out. The temperature was lowered to 93°C and 360 g of Desmodur W (trademark of Mobay Chemical Co., Pittsburg, Pa.) were added dropwise in a period of one hour. After the end of the addition, the mixture was postreacted at 93°C until no NCO group was observed in an infrared spectrum. At this point, 240 g of PCP-0301 (polycaprolactone triol, trademark of Union Carbide) 263 g of adipic acid, 3 g of dibutyl tin oxide, and 215 g of xylene were added. The mixture was heated up to 204°C and water was distilled off until the acid number dropped below 10. The batch was then thinned with 480 parts of methyl amyl ketone. The final product had $Z_3$ viscosity at 70.8% NV and acid number 1.2.

Example 2

In a suitable reactor 562 g of Esterdiol-204 (trademark of Union Carbide) and 360 g of xylene were charged. The mixture was brought to reflux (149°C) and any water present was stripped out. The temperature was lowered to 93°C and 360 g of Desmodur W (trademark of Mobay Chemical Co.) was added dropwise in a period of one hour. After the end of the addition, the mixture was postreacted at 93°C until no NCO group was observed in an IR spectrum. At this point, 240 g of PCP-0301 (polycaprolactone triol, trademark of Union Carbide, New York, N.Y.) 131 g of adipic acid and 133 g of phthalic anhydride, 3 g of dibutyl tin oxide, and 215 g of xylene were added. The mixture was heated up to 204°C and water was distilled off until the acid number dropped below 10. The batch was then thinned with 480 parts of methyl amyl ketone. The final product had $Z_5$ viscosity at 70.1% NV and acid number 3.

Example 3

In a suitable reactor 314 g of Esterdiol-204 (trademark, Union Carbide) and 175 g of xylene were charged. The mixture was brought to reflux (149°C) and any water present was stripped out. The temperature was lowered to 93°C and 202 g of Desmodur W (trademark, Mobay Chemical Co.) were added dropwise in a period of one hour. After the end of the addition, the mixture was postreacted at 93°C until no NCO group was observed in an IR spectrum. At this point, 359 g of Esterdiol-204 (trademark, Union Carbide) 441 parts of PCP-0301 (trademark, Union Carbide), 482 g of adipic acid, 250 g of xylene, and 3 g of dibutyl tin oxide were charged. The mixture was heated up to 204°C and water was distilled off until the acid number dropped below 10. The batch was then thinned at 478 g of methyl amyl ketone. The final product had a viscosity of $X_{\frac{1}{2}}$ at 70.1% NV and 0.9 acid number.

Example 4

In a suitable reactor 562 g of Esterdiol-204 (trademark of Union Carbide) and 360 g of xylene were charged. The mixture was brought to reflux (149°C) and any water present was stripped out. The temperature was lowered to 93°C and 300 g of isophorone diisocyanate was added dropwise in a period of one hour. After the end of the addition, the mixture was postreacted at 93°C until no NCO group was observed in an IR spectrum. At this point, 240 g of PCP-0301 (polycaprolactone triol, trademark of Union Carbide) 263 g of adipic acid, 3 g of dibutyl tin oxide, and 215 g of xylene were added. The mixture was heated up to 204°C and water was distilled off until the acid number dropped below 10. The batch was then thinned with 480 parts of methyl amyl ketone. The final product had Y viscosity at 72% NV and acid number 7.9.

Example 5

In a suitable reactor 286 g of neopentyl glycol and 360 g of xylene were charged. The temperature was raised to 93°C and 360 g of Desmodur-W (trademark of Mobay Chemical Co.) was added dropwise in a period of one hour. After the end of the addition, the mixture was postreacted at 93°C until no NCO group was observed in an IR spectrum. At this point, 240 g of PCP-0301 (polycaprolactone triol, trademark of Union Carbide) 263 g of adipic acid, 3 g of dibutyl tin oxide, and 215 g of xylene were added. The mixture was heated up to 204°C and water and xylene was distilled off until the acid number dropped below 10. The batch was then thinned with 480 parts of methyl amyl ketone. The final product had $Z_4$ viscosity 71.7% NV and acid number 0.8.

Example 6

In a suitable reactor 281 g of Esterdiol-204 (trademark of Union Carbide), 728 g of PCP-0200 (polycaprolactone diol, trademark of Union Carbide) and 360 g of xylene were charged. The mixture was brought to reflux (149°C) and any water present was stripped out. The temperature was lowered to 93°C and 360 g of Desmodur-W (trademark of Mobay Chemical Co.) was added dropwise in a period of one hour. After the end of the addition, the mixture was postreacted at 93°C until no NCO group was observed in an IR spectrum. At this point, 108 g of trimethylol propane, 263 g of adipic acid, 3 g of dibutyltin oxide, and 200 g of xylene were added. The mixture was heated up to 204°C and water and xylene was distilled off until the acid number dropped below 10. The batch was then thinned with 400 parts of methyl amyl ketone. The final product had $Z_1$ viscosity at 72.7% NV and acid number 2.0.

Example 7

In a suitable reactor 562 g of Esterdiol-204 (trademark of Union Carbide) and 360 g of xylene were charged. The mixture was brought to reflux (149°C) and any water present was stripped out. The temperature was lowered to 93°C and 360 g of Desmodur-W (trademark of Mobay Chemical Co.) was added dropwise in a period of one hour. After the end of the addition, the mixture was postreacted at 93°C until no NCO group was observed in an IR spectrum. At this point, 108 g of trimethylol propionic acid and 108 g of dimer acid (Empol 1016, Enery, Ind.) 3 g of dibutyl tin oxide, and 200 g of xylene were added. The mixture was heated up to 204°C and water and xylene was distilled off until the acid number dropped below 10. The batch was then thinned with 400 parts of methyl amyl ketone. The final product had X+ viscosity at 69.2% NV and acid number 2.9.

Example 8

In a suitable reactor 753 g of Esterdiol-204 (trademark of Union Carbide) and 360 g of xylene were charged. The mixture was brought to reflux (149°C) and any water present was stripped out. The temperature was lowered at 93°C and 360 g of Desmodur-W (trademark of Mobay Chemical Co.) was added dropwise in a period of one hour. After the end of the addition, the mixture was postreacted at 93°C until no NCO group was observed in an IR spectrum. At this point, 474 g of PCP-0301 (polycaprolactone triol, trademark of Union Carbide) 263 g of adipic acid, 402 g of dodecanoic acid, 4 g of dibutyl tin oxide, and 200 g of xylene were added. The mixture was heated up to 204°C and water and xylene was distilled off until the acid number dropped below 10. The batch was then thinned with 480 parts of methyl amyl ketone. The final product had $Z_1$ viscosity at 70.0% NV and acid number 5.2.

Example 9

In a suitable reactor 649 g of Esterdiol-204 (trademark of Union Carbide) and 300 g of xylene were charged. The mixture was brought to reflux (149°C) and any water present was stripped out. The temperature was lowered to 93°C and 276 g of toluene diisocyanate (TDI, 80/20, 2,4/2,6 isomers) was added dropwise in a period of one hour. After the end of the addition, the mixture was postreacted at 93°C until no NCO group was observed in an IR spectrum. At this point, 240 g of trimethylol propane, 263 g of adipic acid, 3 g of dibutyl tin oxide, and 200 g of xylene were added. The mixture was heated up to 204°C and water and xylene was distilled off until the acid number dropped below 10. The batch was then thinned with 480 parts of methyl amyl ketone. The final product had Y+ viscosity at 74.5% NV and acid number 1.3.

Example 10

In a suitable reactor 136 g of propylene glycol, 172 g of adipic acid and 66.4 g of toluene were added. The mixture was heated up to reflux and 42.6 g of water were stripped out. At this point 321 g of oligoester made according to Example 1 of US—A—4,322,508 to Peng et al, 250 g of toluene, 10 gms of dibutyl tin dilaurate were added. In a period of 3 hours, 396 parts of Desmodur-W (trademark, Mobay Chemical Co.) were added. During the addition, the temperature was allowed to rise from 116°C to 143°C. The mixture was kept at this temperature until no NCO groups were observed in an IR spectrum. The batch was thinned with 860 g of toluene and 1,260 g isopropanol. The final product had a weight viscosity at 33.1% NV.

Example 11—15

Flexible basecoat compositions were formulated according to the following table:

| Compositions/Example | 11 | 12 | 13 | 14 | 15 |
|---|---|---|---|---|---|
| | (Parts by weight) | | | | |
| Resin of Example 1 | 50 | | | | |
| Resin of Example 2 | | | | | 50 |
| Resin of Example 3 | | 93 | | | |
| Resin of Example 4 | | | 50 | | |
| Resin of Example 10 | | | 100 | | |
| Resin of Example 5 | | | | 57 | |
| Spenlite L06—30S[1] | 100 | | | 50 | 100 |
| Cymel 1130[2] | 46 | 46 | 46 | 46 | 46 |
| Tin-328[3] | 3.6 | 3.6 | 3.6 | 3.6 | 3.6 |
| PTSA (40%) | 1.5 | 1.5 | 1.5 | 1.5 | 1.5 |
| 5000-AR[4] | 50 | 50 | 50 | 50 | 50 |
| Xylene | 75 | 75 | 75 | | 75 |
| Isopropyl alcohol | 75 | 75 | 75 | 75 | 75 |
| Surfynol-104[5] | 6 | 6 | 6 | 21 | 6 |
| Methyl amyl ketone | | | | 100 | 100 |

The above basecoats were reduced to 20 s at #4 Ford Cup with methyl amyl ketone before spraying.

[1]Trademark of Spencer-Kellogg
[2]Trademark, American Cyanamid Co. (highly methylated melamine formaldehyde resin)
[3]Trademark, Ciba-Geigy
[4]Aluminum Paste, purchased Siberline, Laneford, Pa.
[5]Trademark, Air Products & Chemicals, Inc., Allentown, Pa., (surfactant; 2,4,7,9-tetramethyl-5-decyn-4,7-diol).

10

**0 139 513**

Clearcut compositions

| Composition/Example | 16 | 17 | 18 | 19 | 20 | 21 | 22 |
|---|---|---|---|---|---|---|---|
| | | | (Parts by weight) | | | | |
| Resin of Example 1 | 414 | | | | | | 97 |
| Resin of Example 3 | | 250 | | | | | |
| Resin of Example 4 | | | .398 | | | | |
| Resin of Example 5 | | | | 400 | | | |
| Resin of Example 6 | | | | | 394 | | |
| Resin of Example 7 | | | | | | 414 | |
| Resin of Example 8 | | | | | | | |
| Cymel 1130[1] | 95 | 58 | 95.6 | 95 | 95 | 95 | 127 |
| Tinuvin 328[2] | 5.8 | 3.6 | 6 | 6 | 6 | 6 | 5.3 |
| 2-ethyl hexanol | 11.5 | 7.6 | 12.5 | 12.5 | 12.5 | 12.5 | 11 |
| methanol | 4.3 | 26.3 | 41 | 43 | 43 | 43 | 40 |
| methyl amyl ketone | 131 | 80 | 304 | 304 | 304 | 304 | 60 |
| PTSA (40%) | 8.3 | 3.2 | 5.3 | 5.3 | 5.3 | 5.3 | 7.1 |
| Irganox 1010[3] | 0.78 | 0.47 | 0.78 | 0.78 | 0.78 | 0.78 | |

The above compositions were reduced to 30 s viscosity at #4 Ford Cup with methyl amyl ketone.

[1]Trademark, American Cyanamid Co.
[2]Trademark, Ciba-Geigy
[3]Trademark, Ciba-Geigy (Antioxidant)

Example 23—32

The following basecoat/clearcoat coating composition were sprayed over metal and plastic substrates and cured for 30 minutes at 121°C.

| Example Coating composition | 23 | 24 | 25 | 26 | 27 | 28 | 29 | 30 | 31 | 32 |
|---|---|---|---|---|---|---|---|---|---|---|
| Basecoat of Example | 11 | 12 | 13 | 11 | 11 | 11 | 11 | 11 | 11 | 15 |
| Clearcoat of Example | 16 | 16 | 16 | 17 | 18 | 19 | 20 | 21 | 22 | 16 |
| % Elongation | 100 | 60 | 85 | 60 | 85 | 110 | 75 | 100 | 95 | 50 |
| MEK resistance (100 rubs) | Excell | Excell | Excell | Excell | Excell | Excell | Excell | Excell | Excell | Excell |
| QUV (1000 h) | Excell | Excell | Excell | Excell | Excell | Excell | Excell | Excell | Excell | Excell |

Example 33

A millbase was prepared by grinding in a ballmill the following mixture:

| Composition | Parts |
|---|---|
| Resin of Example 9 | 101 |
| 2-ethyl hexanol | 21 |
| Toluene | 50 |
| Anti-Terra-V (Regd. Trade Mark) | 19 |
| Barium sulfate | 547 |
| $TiO_2$ | 103 |
| Carbon black | 4 |
| Strontium chromate | 33 |
| Xylene | 117 |

A high solids primer coating composition was formulated by mixing the following components:

| Composition | Parts |
|---|---|
| Millbase (above) | 82 |
| Resin of Example 9 | 32 |
| Cymel 1130[1] | 11 |
| PTSA (40% sol) | 1.2 |
| n-butyl alcohol | 100 |

The above composition was reduced to 20 sec. #4 Ford Cup at 80°C with methyl amyl ketone. Unpolished banderite steel panels and plastic panels were sprayed and baked for 30 min. at 250°C to give smooth, tough films with good MEK resistance.

Example 34

Into a steel ball mill the following pigment paste was ground.

| Composition | Parts |
|---|---|
| n-butyl alcohol | 100 |
| Cymel 1130[1] | 100 |
| Dispersing agent[2] | 10 |
| $TiO_2$[3] | 600 |
| Resin of Example 1 | 75 |
| Methyl amyl ketone | 115 |

| Enamal composition | Parts |
|---|---|
| Above millbase | 324 |
| Resin of Example 1 | 262 |
| Cymel 1130 | 38 |
| n-butyl alcohol | 136 |
| 2-ethyl hexanol | 49 |
| Methyl amyl ketone | 140 |
| Tinuvin-328[4] | 4 |
| Polymeric hindred amine | 4 |
| Antioxidant[5] | 0.5 |
| Polybutyl acrylate | 0.8 |
| PTSA (40% sol) | 7 |

The above composition was reduced to 18 sec., #4 Ford Cup at 80°C with methyl amyl ketone. Plastic panels were sprayed and cured at 121°C for 30 min. The resulting coating had a smooth appearance, good MEK resistance and when tested for flexibility had an elongation of 90%.

[1]Trademark, American Cyanamid
[2]Nuosperse 700 available from Tommelo Chem.
[3]R960HG supplied by Dupont
[4]Trademark, Ciba-Geigy
[5]Irganox 1010, trade mark Ciba-Geigy

Example 35—41

Two component enamel coatings were formulated according to the compositions shown in Table B. The order of addition was as follows. First the resin was mixed with the flow control additive, CAB (cellulose acetate butyrate) and 2-ethyl hexyl acetate; subsequently the aluminum paste was predesolved in 15 parts of butyl cellosolve acetate and added to the mixture. After the aluminum paste was dispersed, the rest of butyl cellosolve acetate was added. To this mixture the isocyanate, predesolved in 30 parts of methyl amyl ketone, was added right before spraying the coating. The viscosity of the paint was adjusted fast to 20 s #4 Ford Cup (80°C) with methyl amyl ketone. Borderite steel panels and plastic panels were sprayed and baked for 30 min. at 121°C to give smooth, tough films with excellent flexibility and MEK resistance.

TABLE B

| Example Composition | 35 | 36 | 37 | 38 | 39 | 40 | 41 |
|---|---|---|---|---|---|---|---|
| | | | (Parts by weight) | | | | |
| Resin of Example 1 | 198 | | | | | | |
| Resin of Example 4 | | 194 | | | | | |
| Resin of Example 5 | | | 195 | | | | |
| Resin of Example 6 | | | | 192 | | | |
| Resin of Example 7 | | | | | 202 | | |
| Resin of Example 8 | | | | | | 200 | |
| Resin of Example 12 | | | | | | | 198 |
| Flow control additive | 5 | 5 | 5 | 5 | 5 | 5 | 5 |
| Cellulose acetate butyrate[1] | 2 | 2 | 2 | 2 | 2 | 2 | 2 |
| 2-ethyl hexyl acetate | 15 | 15 | 15 | 15 | 15 | 15 | 15 |
| Aluminum paste 8199-AR[2] | 9 | 9 | 9 | 9 | 9 | 9 | 9 |
| Butyl Cellosolve | 50 | 50 | 50 | 50 | 50 | 50 | 50 |
| Desmodur L-2291[3] | 75 | 75 | 75 | 75 | 75 | 75 | 75 |
| Desmodur Z-4370[3] | | | | | | 107 | |
| Methyl amyl ketone | 30 | 30 | 30 | 30 | 30 | 30 | 30 |

Example 42

A millbase was prepared by grinding in a ballmill the following mixture:

| Composition | Parts by weight |
|---|---|
| Resin of Example 1 | 101 |
| Anti-Terra-V (Regd. Trade Mark) | 19 |
| Barium Sulfate | 547 |
| $TiO_2$ | 103 |
| Carbon black | 4 |
| Xylene | 150 |
| Toluene | 50 |

A two component primer coating composition was formulated by mixing the following components.

[1]EAB 381-01 available from Eastman Chem.
[2]Available from Silberline, Lansford, Pa.
[3]Trademark, Mobay Chemical Co., Pittsburgh, Pa.

| Composition | Parts by weight |
|---|---|
| Millbase (above) | 746 |
| Resin of Example 1 | 425 |
| Desmodur L-2291[1] | 150 |
| Methyl amyl ketone | 500 |

The above composition was mixed fast (within 5 min.), reduced to 18 s #4 Ford Cup (80°C) and sprayed over the Bonderite steel and plastic panels. The panels were baked at 250°C for 30 min. and gave smooth tough films with excellent MEK resistance.

[1]Trademark, Mobay Chemical Co., Pittsburgh, Pa.

Examples 43—46

Flexible basecoat compositions were formulated according to the following table:

| Compositions/Example | 43 | 44 | 45 | 46 |
|---|---|---|---|---|
| | (Parts by weight) | | | |
| Resin of Example 1 | 50 | | | |
| Resin of Example 4 | | 93 | | |
| Resin of Example 5 | | | 50 | |
| Resin of Example 10 | | | 100 | |
| Resin of Example 6 | | | | 57 |
| Spenlite L06—30S[1] | 100 | | | 50 |
| Cymel 1130[2] | 46 | 46 | 46 | 46 |
| Tinuvin-328[3] | 3.6 | 3.6 | 3.6 | 3.6 |
| PTSA (40%) | 1.5 | 1.5 | 1.5 | 1.5 |
| 5000-AR[4] | 50 | 50 | 50 | 49 |
| Xylene | 75 | 75 | 75 | |
| Isopropyl alcohol | 75 | 75 | 75 | 75 |
| Surfynol-104[5] | 6 | 6 | 6 | 21 |
| Methyl amyl ketone | | | | 100 |

The above basecoats were produced to 20 sec. at #4 Ford Cup with methyl amyl ketone before spraying.

[1]Trademark, Spencer-Kellogg, Buffalo, N.Y.
[2]Trademark, American Cyanamid Co., Wayne, N.J.
[3]Trademark, Ciba-Geigy
[4]Aluminum Paste, purchased Silberling, Lansford, Pa.
[5]Trademark, Air Products and Chemicals, Inc., Allentown, Pa. (Surfactant: 2,4,7,9-tetramethyl-5-decyn-4,7-diol)

| Clearcoat compositions Composition/Examples | 47 | 48 | 49 | 50 | 51 | 52 | 53 |
|---|---|---|---|---|---|---|---|
| | | | | (Parts by weight) | | | |
| Resin of Example 1 | 414 | | | | | | |
| Resin of Example 4 | | 401 | | | | | |
| Resin of Example 5 | | | 403 | | | | |
| Resin of Example 6 | | | | 397 | | | |
| Resin of Example 7 | | | | | 417 | | |
| Resin of Example 8 | | | | | | 414 | |
| Resin of Example 2 | | | | | | | 414 |
| Desmodur L-2291A[1] | 123 | | 123 | 123 | 123 | 123 | 123 |
| Desmodur Z-4370[2] | 175 | 175 | | | | | 175 |
| Tinuvin-328[3] | 6.2 | 6.2 | 6.2 | 6.2 | 6.2 | 6.2 | 6.2 |
| Polymeric light stabilizer[4] | 8.8 | 8.8 | 8.8 | 8.8 | 8.8 | 8.8 | 8.8 |
| Irganox 1010[5] | 0.8 | 0.8 | 0.8 | 0.8 | 0.8 | 0.8 | 0.8 |
| Methyl amyl ketone | 100 | 100 | 100 | 100 | 100 | 100 | 100 |

The above compositions were reduced to 30 s viscosity at #4 Ford Cup with methyl amyl ketone.

[1,2]Trademark, Mobay Chemical Co., Pittsburgh, Pa.
[3]Trademark, Ciba-Geigy
[4]Hindered amine stabilizer,
[5]Trademark, Ciba-Geigy (Antioxidant)

Example 54—63
The following basecoat/clearcoat coating composition were sprayed over metal and plastic substrates and cured for 30 minutes at 121°C.

| Example Coating composition | 54 | 55 | 56 | 57 | 58 | 59 | 60 | 61 | 62 | 63 |
|---|---|---|---|---|---|---|---|---|---|---|
| Basecoat of Example | 43 | 44 | 45 | 46 | 43 | 43 | 43 | 43 | 43 | 43 |
| Clearcoat of Example | 47 | 48 | 47 | 47 | 48 | 49 | 50 | 51 | 52 | 53 |
| % Elongation | 150 | 155 | 120 | 140 | 200 | 160 | 140 | 130 | 135 | 50 |
| MEK resistance (100 rubs) | Excell | Excell | Excell | Excell | Excell | Excell | Good | Excell | Excell | Excell |
| QUV (1000 h) | Excell | Excell | Excell | Excell | Excell | Excell | Good | Excell | Excell | Excell |

## Claims

1. A flexible coating composition which is characterized in that it comprises, (A) hydroxy-containing urethane modified polyester (i) having a number average molecular weight ($\bar{M}_n$) of between 1000 and 10,000, (ii) having a hydroxyl number of between 30 and 200, and (iii) containing between 1 and 10 urethane groups per molecule, and being made from reactants comprising, (1) urethane modified diol made by reacting (a) diol, and (b) diisocyanate, wherein said diol and said diisocyanate are reacted in a molar ratio of from 4:1 to 4:3, (2) polyol comprising at least 5 weight percent triol, and (3) acid component selected from dicarboxylic acids and anhydrides thereof, (B) crosslinking agent selected from amine-aldehyde crosslinking agent and polyisocyanate crosslinking agent, and (C) 0—60 weight percent, based on the total weight of (A) and (B) of said composition, of a linear polyurethane having a number average molecular weight of between 15,000 and 40,000.

2. A flexible coating composition according to Claim 1, wherein said hydroxy-containing urethane modified polyester has a number average molecular weight of between 2000 and 4000.

3. A flexible coating composition according to Claim 1 or 2, wherein said hydroxy-containing urethan modified polyester has a hydroxyl number of between 50 and 120.

4. A flexible coating composition according to Claim 1, 2 or 3, wherein said urethane modified diol is made by reacting said diol and said diisocyanate in a molar ratio from 2:0.8 to 2:1.2.

5. A flexible coating composition according to any one of the preceding claims, wherein said polyol further comprises diol.

6. A flexible coating composition according to Claim 5, wherein said polyol comprises 10—80 weight percent triol and 90—20 weight percent diol.

7. A flexible coating composition according to Claim 5 or 6, wherein said polyol comprises diol which is an aliphatic, linear diol.

8. A flexible coating composition according to any one of the preceding claims, wherein said dicarboxylic acids comprise $C_6$—$C_{12}$ aliphatic, dicarboxylic acids.

9. A coating composition according to any one of the preceding claims, wherein said composition comprises between 10 and 60 weight percent of said linear polyurethane based on the total weight of (A) and (B) of said composition.

10. A flexible coating composition according to any one of the preceding claims, wherein said amine-aldehyde crosslinking agent is included in said composition in an amount of from 5 to 60 weight percent based on the weight of said hydroxy-containing urethane modified polyester in said composition.

11. A coating composition according to any one of Claims 1 to 5, wherein said polyisocyanate crosslinking agent is included in said composition in an amount of from 5 to 60 weight percent based on the weight of said hydroxy-containing urethane modified polyester in said composition.

12. A coating composition according to any one of the preceding claims, wherein said polyisocyanate crosslinking agent is a diisocyanate.

13. A coating composition according to any one of Claims 1 to 11, wherein said polyisocyanates crosslinking agent has 3 or more reactive isocyanates per molecule.

14. A coating composition according to Claim 13, wherein said polyisocyanate crosslinking agent is a trimerized product of an aliphatic diisocyanate.

15. A coating composition according to Claim 14, wherein said polyisocyanate crosslinking agent is a trimerized reaction product of 1,6 hexamethylene diisocyanate.

16. A coating composition according to Claim 13, wherein said polyisocyanate crosslinking agent is a polyisocyanate having a biuret structure.

17. A flexible basecoat/clearcoat coating composition wherein, said clearcoat composition comprises said coating composition as claimed in any one of the preceding claims, and said basecoat composition comprises said coating composition as claimed in any one of the preceding claims wherein said crosslinking agent is amine-aldehyde crosslinking agent and said basecoat composition additionally comprises pigment.

**Patentansprüche**

1. Elastische Überzugszusammensetzung, dadurch gekennzeichnet, dass sie aus (A) einem hydroxylhaltigen, urethanmodifizierten Polyester mit (i) einem zahlenmittleren Molekulargewicht ($\bar{M}_n$) zwischen 1000 und 10 000, (ii) einer Hydroxylzahl zwischen 30 und 200 und (iii) zwischen 1 und 10 Urethangruppen pro Molekül, der aus (1) einem durch Umsetzung eines (a) Diols und (b) Diisocyanats in einem Umsetzungsverhältnis von 4:1 bis 4:3, (2) einem Polyol mit mindestens 5 Gewichtsprozent Triol und (3) einer unter Dicarbonsäuren und deren Anhydriden ausgewählten Säurekomponente als Ausgangsstoffen hergestellt wurde, (B) einem unter Amin-Aldehydvernetzungsmittel und Polyisocyanatvernetzungsmittel ausgewählten Vernetzungsmittel und (C) 0 bis 60 Gewichtsprozent, bezogen auf das Gesamtgewicht von (A) und (B) in dieser Zusammensetzung, eines linearen Polyurethans mit einem zahlenmittleren Molekulargewicht zwischen 15 000 und 40 000 besteht.

2. Elastische Überzugszusammensetzung nach Anspruch 1, worin dieser hydroxylhaltige, urethanmodifizierte Polyester ein zahlenmittleres Molekulargewicht zwischen 2000 und 4000 besitzt.

3. Elastische Überzugszusammensetzung nach Anspruch 1 oder 2, worin dieser hydroxylhaltige, urethanmodifizierte Polyester eine Hydroxylzahl zwischen 50 und 120· besitzt.

4. Elastische Überzugszusammensetzung nach Anspruch 1, 2 oder 3, worin dieses urethanmodifizierte Diol durch Umsetzung besagten Diols und besagten Diisocyanats im Molverhältnis 2:0,8 bis 2:1,2 hergestellt wird.

5. Elastische Überzugszusammensetzung nach einem der vorhergehenden Ansprüche, worin jenes Polyol ferner Diol enthält.

6. Elastische Überzugszusammensetzung nach Anspruch 5, worin jenes Polyol 10—80 Gewichtsprozent Triol und 90—20 Gewichtsprozent Diol enthält.

7. Elastische Überzugszusammensetzung nach Anspruch 5 oder 6, worin jenes Polyol ein aliphatisches lineares Diol als Diol enthält.

8. Elastische Überzugszusammensetzung nach einem der vorhergehenden Ansprüche, worin als Dicarbonsäuren aliphatische $C_6$—$C_{12}$-Dicarbonsäuren vorliegen.

9. Überzugszusammensetzung nach einem der vorhergehenden Ansprüche, dadurch gekennzeichnet, dass sie zwischen 10 und 60 Gewichtsprozent lineares Polyurethan, bezogen auf das Gesamtgewicht von (A) und (B) in dieser Zusammensetzung, enthält.

10. Elastische Überzugszusammensetzung nach einem der vorhergehenden Ansprüche, worin jenes Amin-Aldehydvernetzungsmittel in einer Menge von 5 bis 60 Gewichtsprozent, bezogen auf das Gewicht jenes hydroxylhaltigen, urethanmodifizierten Polyesters in dieser Zusammensetzung, darin vorliegt.

11. Überzugszusammensetzung nach einem der Ansprüche 1 bis 5, worin jenes Polyisocyanatvernetzungsmittel in einer Menge von 5 bis 60 Gewichtsprozent, bezogen auf das Gewicht jenes hydroxylhaltigen, urethanmodifizierten Polyesters in dieser Zusammensetzung, darin vorliegt.

12. Überzugszusammensetzung nach einem der vorhergehenden Ansprüche, worin als solches Polyisocyanatvernetzungsmittel ein Diisocyanat vorliegt.

13. Überzugszusammensetzung nach einem der Ansprüche 1 bis 11, worin jenes Polyisocyanatvernetzungsmittel 3 oder mehr reaktionsfähige Isocyanatgruppen pro Molekül enthält.

14. Überzugszusammensetzung nach Anspruch 13, worin als solches Polyisocyanatvernetzungsmittel ein trimerisiertes Produkt eines aliphatischen Diisocyanats vorliegt.

15. Überzugszusammensetzung nach Anspruch 14, worin als solches Polyisocyanatvernetzungsmittel ein trimerisiertes Reaktionsprodukt von 1,6-Hexamethylendiisocyanat vorliegt.

16. Überzugszusammensetzung nach Anspruch 13, worin als solches Polyisocyanatvernetzungsmittel ein Polyisocyanat mit Biuretstruktur vorliegt.

17. Elastische Basislack/Klarlack-überzugszusammensetzung, worin die Klarlackzusammensetzung aus besagter Überzugszusammensetzung nach einem der vorhergehenden Ansprüche und die Basislackzusammensetzung aus besagter Überzugszusammensetzung nach einem der vorhergehenden Ansprüche bestehen, wobei als solches Vernetzungsmittel ein Amin-Aldehydvernetzungsmittel vorliegt und diese Basislackzusammensetzung ferner Pigment enthält.

## Revendications

1. Composition de revêtement souple, caractérisée en ce qu'elle comprend: (A) un polyester à groupes hydroxy modifié par un uréthanne ayant (i) un poids moléculaire moyen en nombre ($M_n$) de 1 000 à 10 000, (ii) un indice d'hydroxyle de 30 à 200, et (iii) contenant de 1 à 30 groupes uréthanne par molécule, et étant préparé à partir de réactifs comprenant: (1) un diol modifié par un uréthanne préparé en faisant réagir (a) un diol, et (b) un diisocyanate, où l'on fait réagir ledit diol et ledit diisocyanate suivant un rapport molaire de 4:1 à 4:3, (2) un polyol comprenant au moins 5% en poids de triol, et (3) un composant acide choisi parmi des acides dicarboxyliques et les anhydrides de ceux-ci, (B) un agent de réticulation choisi parmi un agent de réticulation de type amine-aldéhyde et un agent de réticulation de type polyisocyanate, et (C) de 0 à 60% en poids par rapport au poids total des composants (A) et (B) de ladite composition d'un polyuréthanne linéaire ayant un poids moléculaire moyen en nombre de 15 000 à 40 000.

2. Composition de revêtement souple suivant la revendication 1, dans laquelle ledit polyester à groupes hydroxy modifié par un uréthanne a un poids moléculaire moyen en nombre de 2 000 à 4 000.

3. Composition de revêtement souple suivant la revendication 1 ou 2, dans laquelle ledit polyester à groupes hydroxy modifié par un uréthanne a un indice d'hydroxyle de 50 à 120.

4. Composition de revêtement souple suivant la revendication 1, 2 ou 3, dans laquelle ledit diol modifié par un uréthanne, est préparé en faisant réagir ledit diol et ledit diisocyanate suivant un rapport molaire de 2:0,8 à 2:1,2.

5. Composition de revêtement souple suivant l'une quelconque des revendications précédentes, dans laquelle ledit polyol comprend en outre un diol.

6. Composition de revêtement souple suivant la revendication 5, dans laquelle ledit polyol comprend de 10 à 80% en poids de triol et de 90 à 20% en poids de diol.

7. Composition de revêtement souple suivant la revendication 5 ou 6, dans laquelle ledit polyol comprend un diol qui est un diol linéaire aliphatique.

8. Composition de revêtement souple suivant l'une quelconque des revendications précédentes, dans laquelle lesdits acides dicarboxyliques, comprennent des acides dicarboxyliques aliphatiques en $C_6$—$C_{12}$.

9. Composition de revêtement suivant l'une quelconque des revendications précédentes, dans laquelle ladite composition comprend de 10 à 60% en poids dudit polyuréthanne linéaire par rapport au poids total des composants (A) et (B) de ladite composition.

10. Composition de revêtement souple suivant l'une quelconque des revendications précédentes, dans laquelle ledit agent de réticulation de type aminealdéhyde est incorporé dans ladite composition en une quantité de 5 à 60% en poids par rapport au poids dudit polyester à groupes hydroxy modifié par un uréthanne dans ladite composition.

11. Composition de revêtement suivant l'une quelconque des revendications 1 à 5, dans laquelle ledit agent de réticulation de type polyisocyanate est incorporé dans ladite composition en une quantité de 5 à 60% en poids par rapport au poids dudit polyester à groupes hydroxy modifié par un uréthanne dans ladite composition.

12. Composition de revêtement suivant l'une quelconque des revendications précédentes, dans laquelle ledit agent de réticulation de type polyisocyanate est un diisocyanate.

13. Composition de revêtement suivant l'une quelconque des revendications 1 à 11, dans laquelle ledit agent de réticulation de type polyisocyanate, comporte au moins 3 groupes isocyanate réactifs par molécule.

14. Composition de revêtement suivant la revendication 13, dans laquelle ledit agent de réticulation de type polyisocyanate est un produit trimérisé d'un diisocyanate aliphatique.

15. Composition de revêtement suivant la revendication 14, dans laquelle ledit agent de réticulation de type polyisocyanate est un produit de réaction trimérisé du de 1,6-hexaméthylène diisocyanate.

16. Composition de revêtement suivant la revendication 13, dans laquelle ledit agent de réticulation de type polyisocyanate est un polyisocyanate ayant une structure de biuret.

17. Composition de revêtement pour couche de base et couche transparente souples, dans laquelle ladite composition pour couche transparente comprend ladite composition de revêtement tel que revendiquée à l'une quelconque des revendications précédentes, et dans laquelle ladite composition pour couche de base comprend ladite composition de revêtement tel que revendiquée à l'une quelconque des revendications précédentes, ledit agent de réticulation étant un agent de réticulation de type amine-aldéhyde et ladite composition pour couche de base comprenant en outre un pigment.